# EUROPÄISCHE PATENTSCHRIFT

(11) **EP 0 801 101 B1**
(45) Veröffentlichungstag und Bekanntmachung des Hinweises auf die Patenterteilung: **08.03.2000**
(21) Anmeldenummer: 97100223.3
(22) Anmeldetag: 08.01.1997
(51) Int. Cl.: C08K 5/01, C08L 83/04, C09K 3/10

(54) **Verfahren zur Herstellung einer Dichtungsmasse**
Method of making a sealing composition
Procédé pour préparer un matériau d'étanchéité

(30) Priorität: 10.04.1996 DE 19614140
(43) Veröffentlichungstag der Anmeldung: 15.10.1997
(73) Patentinhaber: B & F Formulier- und Abfüll GmbH & Co. KG, 57489 Drolshagen-Iseringhausen (DE)
(72) Erfinder: Wunram, Heinz Peter, 51580 Reichshof (DE); Ishorst, Dirk, 57223 Kreuztal (DE); Gräber, Birgit, 57537 Wissen (DE); Schneider, Friedhelm, 51580 Reichshof (DE)
(74) Vertreter: Missling, Arne, Dipl.-Ing.

(56) Entgegenhaltungen:
- EP-A- 0 043 501
- DE-A- 2 908 036
- DE-A- 4 415 396

## Beschreibung

Die Erfindung betrifft ein Verfahren zur Herstellung einer durch Kontakt mit der Umgebungsfeuchte, durch Wärmezufuhr oder durch Addition ihrer Bestandteile (2K-Produkt) aushärtenden Dichtungsmasse mit einem Silikonpolymer als Basis, einem Vernetzer und einem Beschleuniger sowie nach Bedarf zugesetzten Füllstoffen und Weichmacher.

Dichtungsmassen dieser Art werden in großem Umfang im Bauwesen sowohl im Innen- als auch im Außenbereich zur Abdichtung von Bau- und Dehnungsfugen verwendet. In der Offenlegungsschrift DE 29 08 036 A1 ist eine solche Dichtungsmasse beschrieben, bei der zumindest ein Teil der darin verwendeten nicht reaktionsfähigen Silikonverbindungen unter Beibehaltung der reaktiven Polysiloxane ersetzt werden und dafür organische alkylaromatische Verbindungen zugesetzt werden, die jeweils ein Molekulargewicht von über 200 aufweisen. Die Verwendung beispielsweise von Paraffinöl wird hingegen nicht für vorteilhaft gehalten, weil die damit hergestellten Dichtungsmassen instabil sind und beim Aushärten ausschwitzen.

Die Erfindung hat sich demgegenüber die Aufgabe gestellt, die Herstellungskosten der Dichtungsmasse weiter zu vermindern und den Anteil der dabei verwendeten alkylaromatischen Verbindungen drastisch zu reduzieren.

Gemäß der Erfindung wird das dadurch erreicht, daß ein Gemisch von Paraffinölen zugesetzt wird, deren Molekulargewichte größer sind als 180, daß dieses Gemisch in einem Verhältnis von 5 bis 100 Teilen mit 100 Teilen mit einer oder mehreren alkylaromatischen Verbindungen versetzt und bei 5-10 bar und bei 280°-300°C etwa 2-3 Stunden in einem Reaktor gekocht wird, und zusammen mit den übrigen Bestandteilen der Dichtungsmasse, als Weichmacher zur Herstellung der Dichtungsmasse vermischt wird. Bei der Aufbereitung der Paraffinöle mit ein oder mehreren alkylaromatischen Verbindungen werden diese zuerst gecrackt, die sich dann durch radikalische Polymerisation unkontrolliert miteinander verbinden, wobei auch wieder vereinzelt die Ausgansprodukte entstehen können.

Weitere Merkmale der Erfindung enthalten die Unteransprüche.

Durch das erfindungsgemäße Verfahren werden nunmehr tatsächlich Paraffinöle in großem Umfang zur Steuerung der physikalisch-chemischen Eigenschaften der Dichtungsmasse herangezogen, ohne daß bei deren Verarbeitung am Bau nachteilige Wirkungen wie Ausschwitz-Erscheinungen hätten in Kauf genommen werden müssen. Die Herstellkosten für den Weichmacher werden aber erheblich gesenkt.

Auch Verdickungsmaterial, d. h. Kieselsäure, kann eingespart werden, da das durch die radikalische Polymerisation entstehende Gemisch Paraffinöl/Alkylbenzol eine Verdickung der Dichtungsmasse verursacht.

## Patentansprüche

1. Verfahren zur Herstellung einer durch Kontakt mit der Umgebungsfeuchte, durch Wärmezufuhr oder durch Addition ihrer Bestandteile (2K-Produkt) aushärtenden Dichtungsmasse mit einem Silikonpolymer als Basis, einem Vernetzer und einem Beschleuniger sowie nach Bedarf zugesetzten Füllstoffen und Weichmacher,
dadurch gekennzeichnet, daß
(a) ein Gemisch von Paraffinölen, deren Molekulargewichte größer sind als 180, in einem Verhältnis von 5 bis 100 Teilen mit 100 Teilen einer oder mehreren alkylaromatischen Verbindungen versetzt und bei 5-10 bar und bei 280°-300°C etwa 2-3 Stunden in einem Reaktor gekocht wird, und
(b) zusammen mit den übrigen Bestandteilen der Dichtungsmasse, als Weichmacher zur Herstellung der Dichtungsmasse vermischt wird.

2. Verfahren nach Anspruch 1, dadurch gekennzeichnet, daß ein Gemisch von etwa 30% cyclischen und etwa 70% nicht cyclischen Paraffinölen eingesetzt wird.

3. Verfahren nach Anspruch 1 oder 2, dadurch gekennzeichnet, daß ein Gemisch aus einem Paraffinöl mit der Formel 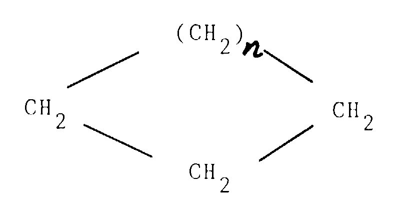 und einem Paraffinöl mit der Formel
CH₃ ― (CH₂)ₙ ― CH₃
verwendet wird.

4. Verfahren nach einem der Ansprüche 1 bis 3, dadurch gekennzeichnet, daß die Dichtungsmasse folgende Zusammensetzung aufweist:
5-12% Verdickungsmittel,
0-30% Füllstoff,
0,01-0,5% Reaktionsbeschleuniger,
30-60% Silikonpolymer,
10-30% Weichmacher,
2,5-6% Vernetzer.

5. Verfahren nach Anspruch 4, dadurch gekennzeichnet, daß das Verdickungsmittel Kieselsäure ist.

## Claims

1. A method of producing a sealing compound, which sets by contact with the surrounding moisture, by the application of heat or by the addition of its constituents (2K product), with a silicone polymer as a base, a cross-linking agent and an accelerator and, where necessary, added fillers and a softener,
**characterized in that**
(a) a mixture of paraffin oils, the molecular weights of which are greater than 180, is mixed in a ratio of from 5 to 100 parts with 100 parts of one or more alkyl aromatic compounds and is boiled at from 5 to 10 bar and at from 280° to 300° for approximately 2 to 3 hours in a reactor, and
(b) is mixed together with the remaining constituents of the sealing compound, as a softener to produce the sealing compound.

2. A method according to Claim 1, **characterized in that** a mixture of approximately 30% of cyclic and approximately 70% of non-cyclic paraffin oils is used.

3. A method according to Claim 1 or 2, **characterized in that** a mixture of a paraffin oil of the formula 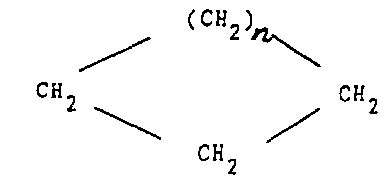 and a paraffin oil of the formula
CH₃ ― (CH₂)ₙ ― CH₃
is used.

4. A method according to one of Claims 1 to 3, **characterized in that** the sealing compound has the following composition:
5 to 12% thickening agent,
0 to 30% filler,
0·01 to 0·5% reaction accelerator,
30 to 60% silicone polymer,
10 to 30% softener,
2·5 to 6% cross-linking agent.

5. A method according to Claim 4, **characterized in that** the thickening agent is silicic acid.

## Revendications

1. Procédé de fabrication d'un matériau d'étanchéité durcissant par contact avec l'humidité ambiante, par chauffage ou par addition de ses composants (produit bi-composants), comprenant un polymère de silicone servant de base, un agent de réticulation et un accélérateur et, si besoin est, des charges additionnelles et un plastifiant,
caractérisé en ce que
(a) un mélange d'huiles de paraffine dont les poids moléculaires sont supérieurs à 180, dans une proportion de 5 à 100 parties, est mélangé à 100 parties d'un ou plusieurs composés alkylaromatiques et cuit à 5/10 bars et à 280/300°C dans un réacteur pendant 2 à 3 heures environ, et
(b) est mélangé aux autres composants du matériau d'étanchéité, en tant que plastifiant pour produire le matériau d'étanchéité.

2. Procédé selon la revendication 1, caractérisé en ce qu'un mélange de 30 % environ d'huiles de paraffine cycliques et 70% environ d'huiles de paraffine non cycliques est utilisé.

3. Procédé selon la revendication 1 ou 2, caractérisé en ce qu'un mélange d'une huile de paraffine dont la formule est 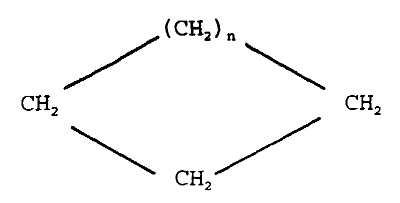 et d'une huile de paraffine dont la formule est
CH₃ ― (CH₂)ₙ ― CH₃
est utilisé.

4. Procédé selon l'une des revendications 1 à 3, caractérisé en ce que le matériau d'étanchéité présente la composition suivante :
| | |
|---|---|
| 5-12% | Epaississant, |
| 0-30% | Charge, |
| 0,01%-0,5% | Accélérateur de la réaction |
| 30-60% | Polymère de silicone |
| 10-30% | Plastifiant |
| 2,5-6% | Agent de réticulation |

5. Procédé selon la revendication 4, caractérisé en ce que l'épaississant est de la silice.
